(19) Europäisches Patentamt / European Patent Office / Office européen des brevets

(11) **EP 2 693 454 B1**

(12) **EUROPEAN PATENT SPECIFICATION**

(45) Date of publication and mention
of the grant of the patent:
**30.11.2016 Bulletin 2016/48**

(21) Application number: **12765739.3**

(22) Date of filing: **31.01.2012**

(51) Int Cl.:
*H01F 38/14* *(2006.01)*      *H01F 27/36* *(2006.01)*

(86) International application number:
**PCT/JP2012/052142**

(87) International publication number:
**WO 2012/132535 (04.10.2012 Gazette 2012/40)**

(54) **POWER-RECEIVING COIL, POWER-RECEPTION DEVICE, AND CONTACTLESS POWER-TRANSMISSION SYSTEM**

STROMEMPFANGSSPULE, STROMEMPFANGSVORRICHTUNG UND KONTAKTLOSES STROMÜBERTRAGUNGSSYSTEM

BOBINE DE RÉCEPTION DE PUISSANCE, DISPOSITIF DE RÉCEPTION DE PUISSANCE ET SYSTÈME DE TRANSMISSION DE PUISSANCE SANS CONTACT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.03.2011 JP 2011081016**

(43) Date of publication of application:
**05.02.2014 Bulletin 2014/06**

(73) Proprietor: **Sony Corporation**
**Tokyo 108-0075 (JP)**

(72) Inventors:
• **YOSHINO, Yoshitaka**
**Tokyo 108-0075 (JP)**
• **MURAKAMI, Tomomichi**
**Tokyo 108-0075 (JP)**

• **KATO, Yoshihiro**
**Tokyo 108-0075 (JP)**

(74) Representative: **Müller Hoffmann & Partner Patentanwälte mbB**
**St.-Martin-Strasse 58**
**81541 München (DE)**

(56) References cited:
| | |
|---|---|
| **EP-A1- 2 675 038** | **WO-A1-2010/147168** |
| **WO-A2-2007/063500** | **JP-A- H08 241 384** |
| **JP-A- 2001 258 182** | **JP-A- 2001 258 182** |
| **JP-A- 2003 045 731** | **JP-A- 2010 074 937** |
| **JP-A- 2010 074 937** | **JP-A- 2011 050 127** |
| **JP-A- 2011 050 127** | **US-A1- 2004 005 809** |

**Description**

Technical Field

The present disclosure relates to a receiving coil to which power is transmitted from an electromagnetically coupled transmitting coil, a reception apparatus including the receiving coil, and a non-contact power transmission system using the receiving apparatus.

Background Art

In recent years, non-contact power transmission systems that transmit power in a non-contact manner by using a transmitting coil and a receiving coil have been proposed (see, for example, Japanese Patent No. 4413236 (Japanese Patent Application No. 2008-206231)).

If a non-contact power transmission transmits power using a transmitting coil in a spiral shape and also a receiving coil in a spiral shape, the receiving coil in a reception apparatus is greatly affected by metal (used, for example, in the cabinet or circuit) in the apparatus and the Q value is significantly degraded. The Q value is an index indicating the relationship between retention and loss of energy or the strength of resonance of a resonant circuit.

For the purpose of preventing the influence of the metal, a magnetic sheet is affixed to the transmitting coil and receiving coil in a spiral shape. The magnetic sheet needs a certain thickness to prevent the influence of metal inside the apparatus. In addition, a magnetic sheet far larger than the coil is needed to completely prevent the influence of metal inside the apparatus. The magnetic sheet is generally made of ferrite (sintered body). Thus, to create a magnetic sheet thinly, a ferrite sheet is thinly created and stacked with a thin resin sheet thereon and thereunder before being finely cut to form the magnetic sheet, resulting in a very high price. Because the magnetic sheet of ferrite is, as described above, fitted to the coil, the magnetic sheet has a large area and varies in thickness or the like greatly so that variations of the constant of the coil resulting from variations in thickness or the like chiefly cause degradation of the Q value.

When power is transmitted in a non-contact manner, the power transmission efficiency (also called the "inter-coil efficiency") ($\eta_{rf}$) is theoretically uniquely determined from the coupling coefficient k as a degree of coupling between a transmitting coil and a receiving coil and the Q value ($Q_1$) of the transmitting coil and the Q value ($Q_2$) of the receiving coil at no load. Formulas to determine the inter-coil efficiency ($\eta_{rf}$) are shown in Formulas (1) to (3).
[Math 1]

$$\eta_{rf} = \frac{S^2}{(1 + \sqrt{1 + S^2})^2}$$

Formula (1)

[Math 2]

$$S = kQ$$

Formula (2)

[Math 3]

$$Q = \sqrt{Q_1 Q_2}$$

Formula (3)

As shown above, the inter-coil efficiency ($\eta_{rf}$) of Formula (1) is determined by the value of $S = k \cdot \sqrt{(Q_1 \cdot Q_2)}$ in Formula (2).

If a large value is obtained as the coupling coefficient k between the transmitting coil and the receiving coil, that is, in the case of electromagnetic induction, power can still be transmitted even if the transmitting coil and the receiving coil have almost the same size as the diameters of winding of the transmitting coil and the receiving coil and the Q values ($Q_1$, $Q_2$) are small. However, the inter-coil efficiency ($\eta_{rf}$) in the case of electromagnetic induction depends on the coupling coefficient k and thus, the accuracy of position between the transmitting coil and the receiving coil is very important and misregistration is not permitted. Thus, when charged in the case of electromagnetic induction, the transmitting coil and the receiving coil is in a one-to-one correspondence. If an electronic device having a high rate of using metal such as a mobile phone terminal or a digital camera is placed above a transmitting coil in a spiral shape, the Q value of the receiving coil contained in the electronic device is significantly degraded so that it is necessary to compensate for the degraded portion with the coupling coefficient k.

On the other hand, a method, as an electromagnetic resonance method, of transmitting power to a plurality of electronic devices and also freely arranging the receiving coil with respect to the transmitting coil by decreasing the coupling coefficient k between the transmitting coil and the receiving coil to increase the Q value as a resonator is proposed.

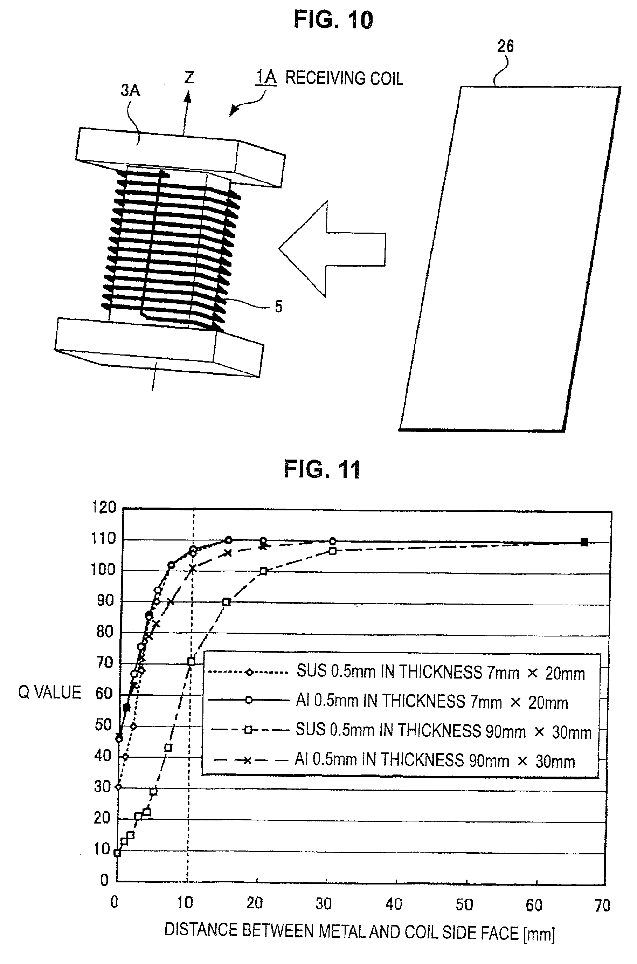

JP 2011/050127 A discloses a noncontact power feeder having a primary side coil and a secondary side coil. Both coils include a ferrite core. A board made of aluminum is provided on the side of the coil opposite to the side where the coils face each other, cf. Fig. 11. The board prevents leakage of the magnetic field . A non-contact power feeder is also known from JP 2001258182 A.

Summary of Invention

Technical Problem

However, if a receiving coil contained in an electronic device having a high rate of using metal such as a mobile phone terminal or a digital camera is placed above a transmitting coil in a flat spiral shape, the Q value ($Q_1$) of the transmitting coil and the Q value ($Q_2$) of the receiving coil are degraded so that power can no longer be transmitted. Therefore, uses thereof have been limited to those that are not affected by metal in an electronic device.

To increase the degree of freedom of arrangement with respect to a transmitting coil, a receiving coil mounted in an electronic device is made smaller than the transmitting coil, has the Q value of about 50, which is not large, and is degraded, which makes it difficult to realize a non-contact power transmission system that enables excellent power transmission.

The present invention is developed in view of the above circumstances and increases the Q value of a receiving coil used in a reception apparatus and also decreases the degradation of the Q value of the receiving coil when put inside a cabinet.

Solution to Problem

The above objects are solved by a receiving coil according to present claim 1. Preferred features are specified in dependent claims 2-5.

According to the configuration in the present invention, the Q value can be increased by forming a coil portion by winding a wire around a core having a magnetic body. By arranging a non-magnetic metal body in a position at a predetermined distance from a side face of the coil portion, degradation of the Q value when the coil portion is inserted into a cabinet having a large amount of metal can be controlled.

Advantageous Effects of Invention

According to the present invention, the Q value of a receiving coil used in a reception apparatus can be increased and also the degradation of the Q value of the receiving coil when put inside a cabinet can be decreased.

Brief Description of Drawings

[FIG. 1] FIG. 1 is an external perspective view of a receiving coil according to an embodiment of the present invention.

[FIG. 2] FIG. 2 is a front view of the receiving coil shown in FIG. 1.

[FIGS. 3(a) to 3(d)] FIGS. 3(a) to 3(d) are explanatory views showing a manufacturing process of the receiving coil shown in FIG. 1.

[FIG. 4] FIG. 4 is an explanatory view showing a combination example of a conventional transmitting coil and receiving coil.

[FIG. 5] FIG. 5 is an explanatory view of a state in which a mobile terminal phone mounted with the conventional receiving coil is arranged above the transmitting coil.

[FIG. 6] FIG. 6 is a graph showing the Q value of a primary coil when the mobile terminal phone mounted with the conventional receiving coil is moved above the transmitting coil.

[FIG. 7] FIG. 7 is an explanatory view showing the combination of the receiving coil according to an embodiment of the present invention and a transmitting coil.

[FIG. 8] FIG. 8 is a graph showing an example of characteristics of the S value - inter-coil efficiency in the combination of the receiving coil and the transmitting coil in FIG. 7.

[FIG. 9] FIG. 9 is a graph showing an example of characteristics of the distance to the primary coil - inter-coil efficiency in the combination of the receiving coil and the transmitting coil in FIG. 7.

[FIG. 10] FIG. 10 is an explanatory view showing a state in which a metal is brought closer to a side face of the receiving coil according to an embodiment of the present invention.

[FIG. 11] FIG. 11 is a graph showing an example of characteristics of the distance between metal and coil side face - Q value.

[FIG. 12] FIG. 12 is a schematic diagram of a non-contact power transmission system including the receiving coil according to an embodiment of the present invention, and the transmitting coil.

Description of Embodiment

An embodiment to carry out the present invention will be described with reference to the appended drawings. The description will be provided in the following order. Incidentally, elements common to each figure are denoted with the same reference signs and a repeated description is omitted.

    1. Structure of Receiving Coil According to an Embodiment (Example in Which Conductor is Wound around H-Type Core)
    2. Combination of Conventional Transmitting Coil and Receiving Coil
    3. Combination of Transmitting Coil and Receiving Coil According to an Embodiment

4. Others

<1. Structure of Receiving Coil According to an Embodiment>

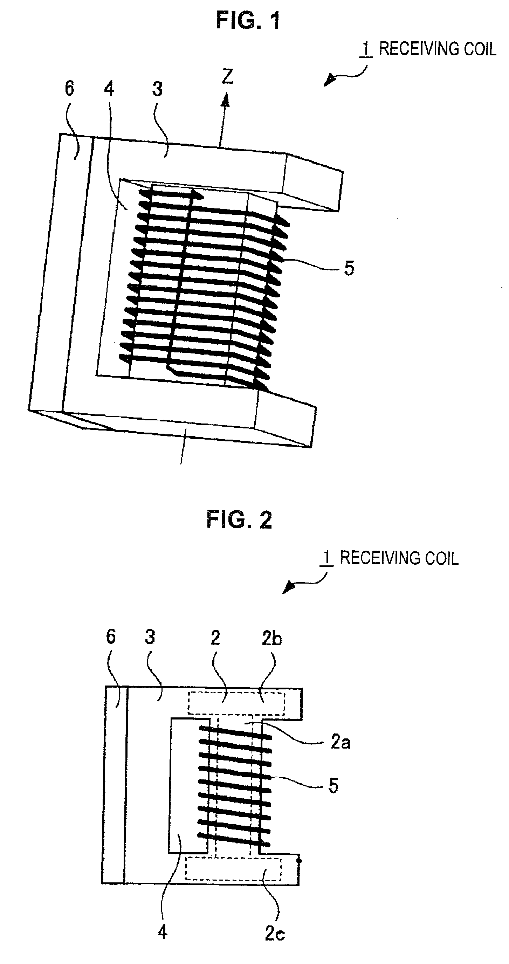

First, the structure of a receiving coil according to an embodiment (hereinafter, referred to also as the "present example") of the present invention will be described with reference to FIGS. 1 and 2.

FIG. 1 is an external perspective view of a receiving coil according to an embodiment of the present invention. FIG. 2 is a front view of the receiving coil shown in FIG. 1. The receiving coil is a coil used on the receiving side of a non-contact power transmission system that transmits power by electromagnetically coupling two coils. Electromagnetic coupling is also called "electromagnetic resonant coupling" or "electromagnetic resonance" and includes electric coupling and magnetic coupling. Resonance is used in both cases and power transmission is performed by electric or magnetic coupling to a resonant device only. In the following example, electromagnetic coupling will be described.

A receiving coil 1 in the present example is configured by winding a wire 5 (in the present example, the wire diameter $\phi$ is 1.0 mm) obtained by bundling, for example, 15 Litz wires (in the present example, the wire diameter $\phi$ is 0.2 mm) in which a plurality of thin annealed copper wires is stranded around a core (magnetic core) 2 of H type as a side shape made of a magnetic material (for example, ferrite) by a predetermined turn number. Then, a non-magnetic body 6 made of aluminum (Al) of, for example, 0.5 mm in thickness is affixed to a resin portion 3 enclosing the whole core 2 at a predetermined distance from an axis portion 2a of the core 2 in parallel with the axis (Z axis) of the axis portion 2a of the core 2. While the non-magnetic body 6 is affixed, the inductance (L value) of the receiving coil 1 is 7.61 $\mu$H and the Q value is 180.

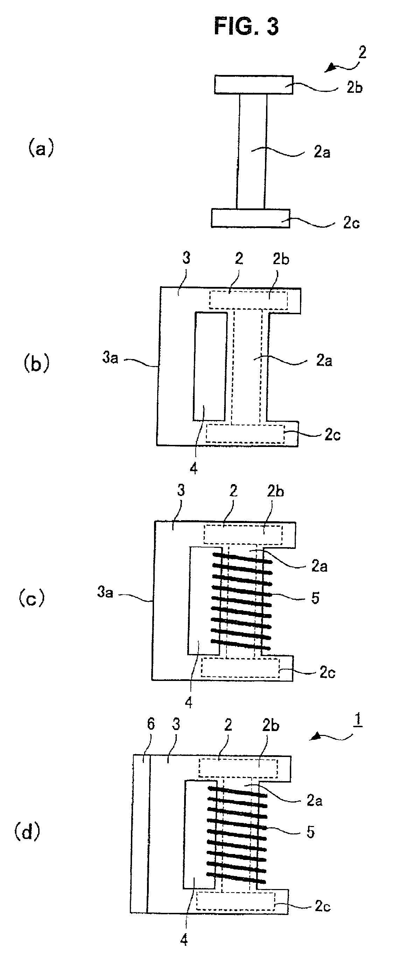

Next, the manufacturing process of the receiving coil 1 will be described with reference to FIGS. 3(a) to 3(d).

First, the H-type core 2 in which flange portions 2b, 2c are attached to both ends of the axis portion 2a made of ferrite is created (FIG. 3(a)).

Subsequently, the resin portion 3 is formed by a technique such as molding like covering the whole H-type core 2 with a resin (FIG. 3(b)). The resin portion formed so that a side face 3a of the resin portion 3 is at a predetermined distance from the center axis (Z axis) of the axis portion 2a of the core 2. In this example, a void portion 4 is provided between the side face 3a of the resin portion 3 and a portion corresponding to the axis portion 2a of the core 2 to reduce the amount of resin used for the resin portion 3 and also to make the receiving coil 1 lighter.

Then, the wire 5 is wound around a portion of the axis portion 2a of the core 2 of the formed resin portion 3 (example of a coil portion) (FIG. 3(c)). The L value is adjusted by the winding number.

Lastly, the tabular non-magnetic body 6 made of aluminum of, for example, 0.5 mm in thickness is affixed to the side face 3a of the resin portion 3 to complete the receiving coil 1.

Aluminum is affixed as a non-magnetic body in the present example, but a non-magnetic material such as copper may also be used. One tabular non-magnetic body is affixed, but the non-magnetic body may be affixed to two sides or three sides like surrounding the core 2. A rectangular tabular non-magnetic material is used, but a non-magnetic body may be provided around the axis portion 2a of the core 2 along the cylinder.

The shape of the core is an H type in the present example, but approximately the same result is obtained from a T type or an I type with a slightly lower coupling coefficient. The T type is a shape in which only one of the flange portions 2b, 2c is affixed to the core 2 in FIG. 3(a). The I type is a shape in which none of the flange portions 2b, 2c is affixed or the area thereof is smaller than that of the H type.

The distance between the axis portion 2a of the core 2 and the non-magnetic body 6 (non-magnetic material such as a metal) is secured by the formed resin portion 3 in the present example, but in addition to this method, a formed mold may be affixed. To describe by taking FIG. 3(b) as an example, instead of integrally configuring the whole resin portion 3, the formed mold is applied to the left portion from the void portion 4.

The sectional shape of the axis portion 2a of the core 2 in the present example is rectangular, but may also be circular. Further, the same magnetic material is used for the axis portion 2a and the flange portions 2b, 2c of the core 2, but an amorphous alloy having a higher permeability may be applied to the flange portions 2b, 2c. As the amorphous alloy, a cobalt (Co) group amorphous alloy like, for example, Mg-Zn alloy is known. When the amorphous alloy is used, strength is increased and so the flange portion can be made slimmer, resulting in miniaturization of the core 2 as a whole. Further, the whole core 2 may be formed from an amorphous alloy.

<2. Combination of Conventional Transmitting Coil and Receiving Coil>

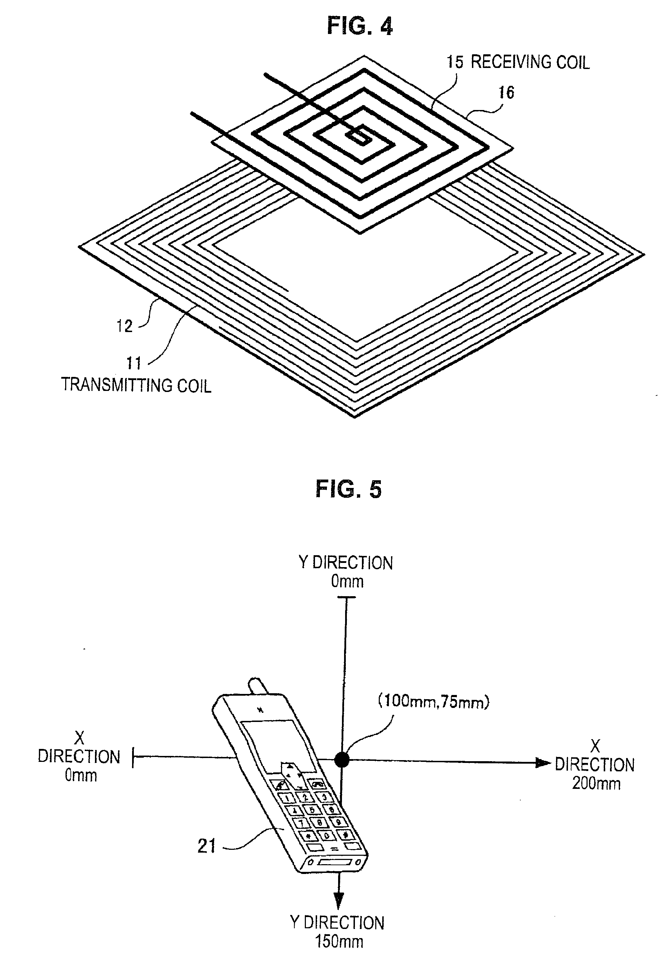

The combination of a conventional transmitting coil and receiving coil will be described with reference to FIGS. 4 to 6.

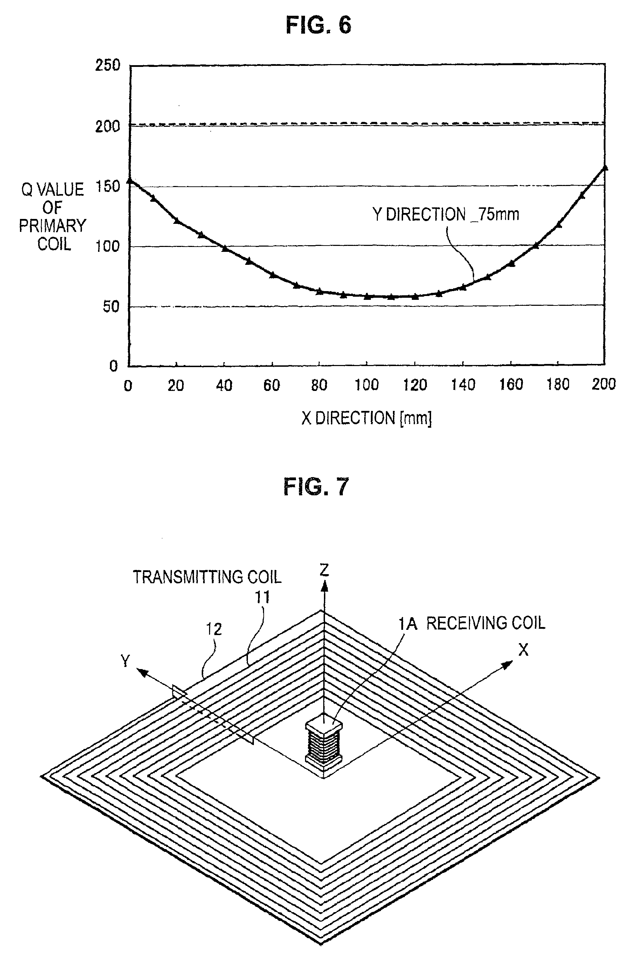

FIG. 4 is an explanatory view showing a combination example of a conventional transmitting coil and receiving coil. FIG. 5 is an explanatory view of a state in which a mobile terminal phone mounted with the conventional receiving coil is arranged above the transmitting coil. FIG. 6 is a graph showing the Q value of a primary coil when the mobile terminal phone mounted with the conventional receiving coil is moved above the transmitting coil.

In the example of FIG. 4, a transmitting coil 11 in a flat spiral shape is used on the receiving side and the size of the transmitting coil 11 is set to, for example, 190 X 150 mm. The transmitting coil 11 adopts alpha winding in which the wire of the winding start and end is wound around the outer circumference of a coil. The space factor can be improved by alpha winding. On the other hand, a receiving coil 15 in a flat spiral shape is used on the receiving side and the size of the receiving coil 15 is set to, for example, 40 X 30 mm. A magnetic sheet 12 (190 X 150 mm) and a magnetic sheet 16 (40 X 30 mm) of ferrite of the same size as the respective coils are affixed to the back surface (opposite surface with respect to the coil) of the transmitting coil 11 and the receiving coil 15. In this case, the Q value of the transmitting coil 11 is 230.5, the Q value of the receiving coil 15 is 59.5, and the coupling coefficient k is 0.096.

As shown in FIG. 5, the receiving coil 15 is actually incorporated into a mobile phone terminal 21 and the mobile phone terminal 21 is moved above the transmitting coil 11 in the X direction and in the Y direction for measurement. Incidentally, one corner of a rectangular coil shape is set as the origin. When the mobile phone terminal 21 is placed in the approximate center (95 mm in the X direction and 75 mm in the Y direction) of the transmitting coil 11, the Q value of the transmitting coil 11 is degraded from 230.5 to 58 (see FIG. 6) and the Q value of the receiving coil 15 is also degraded from 59.5 to 46.4. The inter-coil efficiency is also degraded from 84% to 54% and further, the value of the coupling coefficient k is degraded to 0.068, which is a value of level that is almost impracticable.

<3. Combination of Transmitting Coil and Receiving Coil According to an Embodiment>

Next, the combination of a transmitting coil and a receiving coil according to the present invention will be described with reference to FIGS. 7 to 9.

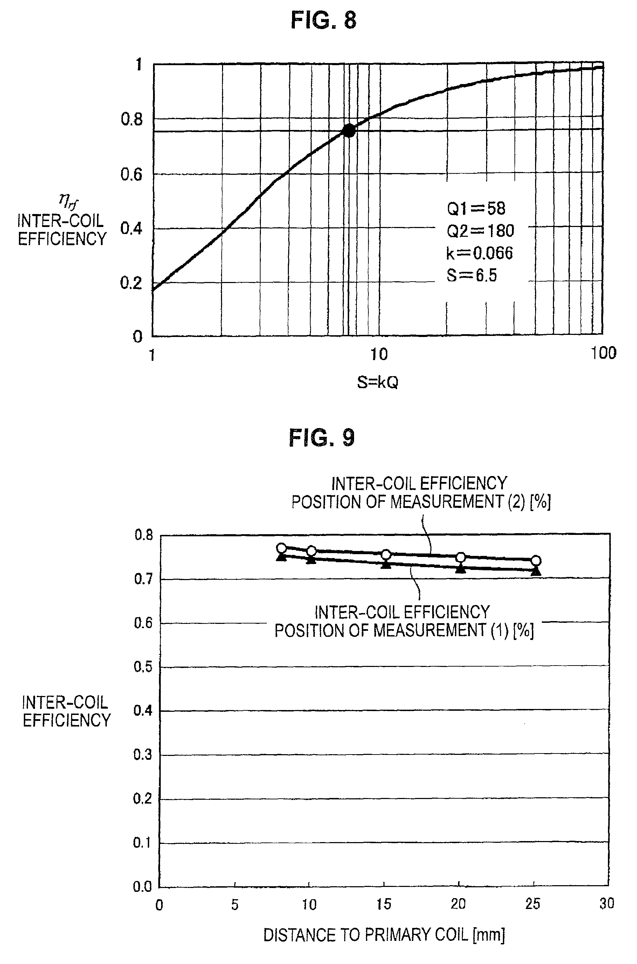

FIG. 7 is an explanatory view showing the combination of the receiving coil according to an embodiment of the present invention and a transmitting coil. FIG. 8 is a graph showing an example of characteristics of the S value - inter-coil efficiency in the combination of the receiving coil and the transmitting coil in FIG. 7. FIG. 9 is a graph showing an example of characteristics of the distance to the primary coil - inter-coil efficiency in the combination of the receiving coil and the transmitting coil in FIG. 7.

A receiving coil 1A used for measurement shown in FIG. 7 has the same structure as the receiving coil 1 in FIG. 1 except that the non-magnetic body 6 is not included. The receiving coil 1A is actually incorporated into the mobile phone terminal 21 and the mobile phone terminal 21 is moved above the transmitting coil 11 for measurement. The receiving coil 1A is arranged so that the center axis of the axis portion 2a of the core 2 and the center axis (Z axis) of the flat transmitting coil 11 are parallel to each other.

In this case, the Q value ($Q_1$) of the transmitting coil 11 is degraded like the conventional example in FIG. 4, but it is clear that, as shown in FIG. 8, the theoretical value of the Q value ($Q_2$) of the receiving coil 1A is 180 even if the receiving coil 1A is incorporated into the mobile phone terminal 21 and is hardly degraded. When the receiving coil 1A is actually contained in the mobile phone terminal 21, the coupling coefficient k is 0.066, which is smaller than that of the conventional receiving coil 15 (FIG. 4). However, the Q value of the receiving coil 1A is far higher than the conventional one and is not degraded, achieving 78% as the inter-coil efficiency. As shown in FIG. 9, measurements of the distance between the receiving coil 1A and the transmitting coil 11 are made in a plurality of arrangements by changing the physical relationship between both on the XY plane and no significant degradation of the inter-coil efficiency is observed. Therefore, regarding the inter-coil efficiency, it can be said that the degree of freedom of arrangement with respect to a transmitting coil is high and a very high level can be realized even if incorporated into a set device.

(Distance between a receiving coil and a metal plate)

Next, the distance between a receiving coil according to an embodiment of the present invention and a metal plate will be described.

FIG. 10 is an explanatory view showing a state in which a metal plate 26 is brought closer to a side face of the receiving coil 1A made of a resin portion 3(a) containing the core 2. FIG. 11 is a graph showing characteristics of the Q value with respect to the distance between the receiving coil 1A (coil side face) and the metal plate 26. In the present example, aluminum (Al) and stainless steel (SUS) of, for example, 0.5 mm in thickness are used as the metal plates for measurement.

In FIG. 11, the Q value of the receiving coil 1A tends to be degraded when the metal plate 26 is present nearby and the Q value is more degraded with an increasing area of the metal plate. Regarding the material of the metal, the Q value of the aluminum is less degraded that that of stainless steel. This can be considered to result from the fact that a magnetic line of force does not remain in a non-magnetic material like aluminum so that an eddy current is less likely to flow and resistance to a high-frequency signal increases. It is clear that for a non-magnetic material like aluminum, the influence is reduced when the distance from a coil wound around the core is about 10 mm.

In the example of FIG. 11, measurements are made using a non-magnetic body of the thickness of 0.5 mm, but similar results are obtained when a non-magnetic body of aluminum or copper of the thickness of 0.3 mm is used. A non-magnetic body of the thickness of 0.3 mm is advantageous to the use in a cabinet whose design space is limited like a mobile phone terminal.

Though it is known that a coil at a distance of about 10 mm from a non-magnetic body is less affected by the non-magnetic material, the distance may be set up to about 5 mm due to restrictions of arrangement of an electronic device. In such a case, problems of actual use may be avoided by adjusting the winding number of wire by allowing for degradation of the Q value in advance and increasing the Q value.

In the present example using electromagnetic coupling, even if the coupling coefficient k is small, the degree of freedom of arrangement of the transmitting coil and receiving coil is increased by increasing the Q value of primary and secondary series resonant circuits. As an example, the coupling coefficient k between the transmitting coil and receiving coil is designed to be 0.2 or less and the Q value of at least one of the primary coil and secondary coil is designed to be 100 or more. The coupling coefficient k depends on the size of the primary coil and the coupling coefficient k increases with a decreasing size of the primary coil and the above design is adopted in consideration of the above facts.

(Effects of an embodiment)

According to a receiving coil according to an embodiment described above and the combination of the receiving coil and a transmitting coil, the receiving coil has a degree of freedom of arrangement with respect to the transmitting coil and can receive power efficiently. That is, the degradation of the Q value of the receiving coil when incorporated into an electronic device can be reduced and transmission of power can be realized by ensuring the degree of freedom even if the Q value of the transmitting coil is degraded when the electronic device is placed above the transmitting coil.

In addition, a receiving coil according to an embodiment using a wire as a core is cheaper than a conventional spiral coil. Further, when compared with a conventional spiral coil, receiving coils with less variations of the coil constant (for example, the Q value) can be manufactured.

In an embodiment example of the present invention, an example of performing power transmission by the receiving coil 1(1A) and the transmitting coil 11 shown in FIG. 7 has been described, but an embodiment is not limited to the above example. For example, a repeater coil to make a magnetic flux uniform may be provided in the transmitting coil 11 to transmit power from the transmitting coil 11 to the receiving coil 1 (1A) via the repeater coil.

<4. Others>

(Another embodiment of the receiving coil)

As another embodiment of the receiving coil according to the present invention, a receiving coil having the following manufacturing process can be considered,.

First, the coated wire 5 is wound around the H-type core 2 (corresponding to FIG. 3(c)) (example of the coil portion). The L value is adjusted by the winding number. Next, the core 2 around which the wire 5 is wound is inserted into a case of a mold member formed from resin and fixed by an adhesive or the like (corresponding to FIG. 3(b)). Then, the non-magnetic body 6 is affixed to the side face of the mold member (corresponding to FIG. 3(d)). The receiving coil is designed and manufactured so that the top surface of the flange portion 2b of the H-type core 2 and the undersurface of the flange portion 2c are flush with the top surface and the undersurface of the case of the mold member. If the receiving coil is manufactured as described above, the height of the H-type core 2 and the height of the case of the mold member can be made the same, which makes slimming down easier to achieve when compared with a case of molding with resin.

(Non-contact power transmission system using a receiving coil according to the present invention and a transmitting coil)

A non-contact power transmission system using a receiving coil according to the present invention described above and a transmitting coil will be described.

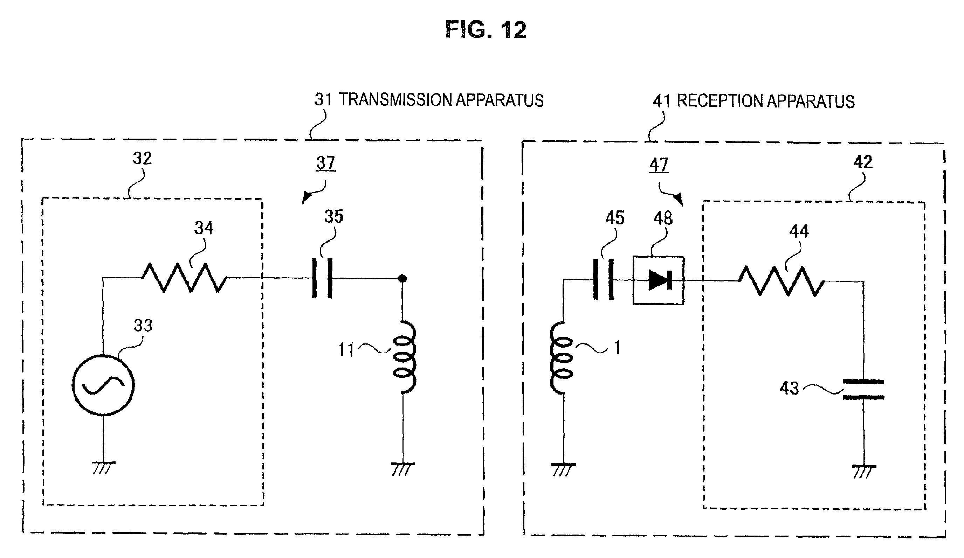

FIG. 12 is a schematic diagram of a non-contact power transmission system including the receiving coil according to an embodiment of the present disclosure and the transmitting coil. FIG. 1 shows an example of the most basic circuit configuration (in the case of magnetic coupling) of a non-contact power transmission system.

The non-contact power transmission system in the present example includes a transmission apparatus 31 and a reception apparatus 41.

The transmission apparatus 31 includes a signal source 32 containing an AC power supply 33 that generates an AC signal and a resistive element 34, a capacitor 35, and the transmitting coil (primary coil) 15. The resistive element 34 shows internal resistance (output impedance) of the AC power supply 33 as an illustration. The capacitor 35 and the transmitting coil 11 are connected to the signal source 32 so as to form a series resonant circuit (example of the resonant circuit). Then, the value (C value) of capacitance of the capacitor 35 and the value (L value) of inductance of the transmitting coil 11 are adjusted so as to produce resonance at the frequency to be measured. A transmission unit 37 including the signal source 32 and the capacitor 35 transmits power to the reception apparatus 41 through the transmitting coil 11 in a non-contact manner (power transmission (power feed)).

The reception apparatus 41 includes a charge unit 42 containing a capacitor 43 (secondary battery) and a resistive element 44, a rectifier 48 that converts an AC signal into a DC signal, a capacitor 45, and the receiving coil (secondary coil) 1. The resistive element 44 shows internal resistance (output impedance) of the capacitor 43 as an illustration. The capacitor 45 and the receiving coil 1 are connected to the charge unit 42 so that a series resonant circuit is formed and the value (C value) of capacitance of the capacitor 45 and the value (L value) of inductance of the receiving coil 1 are adjusted so as to produce resonance at the frequency to be measured. A reception unit 47 including the charge unit 42, the rectifier 48, and the capacitor 45 receive power from outside through the receiving coil 1 in a non-contact manner (power reception).

If the voltage between the transmitting coil 11 and the capacitor 35 constituting the series resonant circuit of the transmission apparatus 31 is V1 (example of the voltage applied to a resonant circuit) and the voltage between both ends of the transmitting coil 11 is V2, the Q value of the series resonant circuit is expressed as Q = V2/V1. This also applies to the reception apparatus 41.

FIG. 12 shows a basic circuit including a series resonant circuit and thus, if the function of the above circuit is included, various forms can be considered as a detailed configuration. In FIG. 12, for example, the capacitor 43 is shown as an example of the load provided in the reception apparatus 41, but the present example is not limited to the above example. In addition, the reception apparatus 41 may include the signal source 32 (transmission unit 37) to transmit power to an external apparatus via the receiving coil 1 in a non-contact manner or the transmission apparatus 31 may include a load to receive power from an external apparatus via the transmitting coil 11 in a non-contact manner. As the reception apparatus 41, various electronic devices such as a mobile phone terminal and digital camera are applicable.

While the series resonant circuit is taken as an example in the present example, a parallel resonant circuit may also be used as a resonant circuit. For example, a parallel resonant circuit may be configured by connecting a first capacitor in series to a parallel circuit of a second capacitor and the transmitting coil 11. Also, a parallel resonant circuit may be configured by connecting a second capacitor in parallel to a series circuit of a first capacitor and the transmitting coil 11. The Q value is calculated by using the voltage V1 between the transmitting coil 11 and the first capacitor and the voltage V2 between both ends of the transmitting coil 11 obtained from a parallel resonant circuit. The series resonant circuit and parallel resonant circuit described above are only examples of the resonant circuit and the configuration thereof is not limited to these configurations.

A substrate with a capacitor to adjust the L value of the coil and the resonance frequency may be affixed to a non-magnetic body of aluminum on the side face of the receiving coil. The substrate may be affixed to both of the capacitor for series resonant circuit and the capacitor for parallel resonant circuit so that the user can select one of both substrates. By adjusting the resonance frequency during manufacture as a resonant circuit module in this manner, there arises no need for the user to adjust the frequency. For example, by combining the resonant circuit module with a reception unit capable of receiving an AC voltage of the applicable resonance frequency, the module can immediately be used as a reception apparatus.

Reference Signs List

| 1, 1A | receiving coil |
|---|---|
| 2 | core (H type) |
| 2a | axis portion |
| 2b, 2c | flange portion |
| 3, 3A | resin portion |
| 3a | side face |
| 4 | void portion |
| 5 | wire |
| 6 | non-magnetic body |
| 11 | transmitting coil |
| 12 | magnetic sheet |
| 15 | receiving coil |
| 16 | magnetic sheet |
| 21, 31 | mobile phone terminal (electronic device) |
| 31 | transmission apparatus |
| 32 | signal source |
| 33 | AC power supply |
| 34 | resistive element |
| 35 | capacitor |
| 15 | transmitting coil |
| 37 | transmission unit |
| 41 | reception apparatus |
| 42 | charge unit |
| 43 | capacitor |
| 44 | resistive element |
| 45 | capacitor |
| 47 | reception unit |
| 48 | rectifier |

**Claims**

1. A receiving coil (1, 1A), comprising:

a core (2) having a magnetic body;
a coil portion in which a wire (5) is wound around the core (2) and which is electromagnetically coupled to an external coil to transmit power; and **characterized in that** a non-magnetic metal body (6) is arranged at a side face of the coil portion,
wherein the non-magnetic metal body (6) has a thickness of 0,3 mm or more;
a resin portion (3, 3A) is provided containing the core (2) having the magnetic body and the coil portion;
the non-magnetic metal body (6) is arranged on a side face (3a) of the resin portion (3, 3A);
the non-magnetic metal body (6) is arranged at about 5 mm from the side face of the coil portion;

and
the Q value of the receiving coil (1, 1A) is designed to be 100 or more.

2. The receiving coil (1, 1A) according to claim 3, wherein the core (2) has an H-type shape.

3. A reception apparatus (41), comprising:

the receiving coil (1, 1A) of claim 1 or 2; and
a reception unit (47) that is configured to receive an AC signal via the coil portion.

4. A non-contact power transmission system (31; 41) comprising:

a transmission apparatus (31) that is configured to generate an AC signal; and
a reception apparatus (41) according to claim 3 that is configured to receive the AC signal generated by the transmission apparatus (31),
wherein the transmission apparatus (31) includes:

a transmitting coil portion (11) in which a wire is wound flatly; and
a transmission unit (37) that is configured to supply the AC signal to the transmitting coil portion (11), and

wherein the reception apparatus and the transmission apparatus are configured such that both have a Q value of 100 and more and a coupling coefficient k = 0,2.

5. The non-contact power transmission system (31, 41) according to claim 4,
wherein the transmitting coil portion (11) is opposite to the receiving coil portion and comprises a magnetic sheet (12) on the surface of the transmitting coil portion (11).

**Patentansprüche**

1. Empfangsspule (1, 1A), die Folgendes umfasst:

einen Kern (2) mit einem magnetischen Körper;
einen Spulenabschnitt, in dem ein Draht (5) um den Kern (2) gewickelt ist und der an eine äußere Spule elektromagnetisch gekoppelt ist, um Leistung zu übertragen; und
**dadurch gekennzeichnet, dass**
ein nicht magnetischer Metallkörper (6) an einer Seitenfläche des Spulenabschnitts angeordnet ist, wobei der nicht magnetische Metallkörper (6) eine Dicke von 0,3 mm oder mehr aufweist;
ein Harzabschnitt (3, 3A) vorgesehen ist, der den Kern (2) enthält, der den magnetischen Körper und den Spulenabschnitt aufweist;
der nicht magnetische Metallkörper (6) an einer Seitenfläche (3a) des Harzabschnitts (3, 3A) angeordnet ist;
der nicht magnetische Metallkörper (6) bei etwa 5 mm von der Seitenfläche des Spulenabschnitts angeordnet ist; und
der Q-Wert der Empfangsspule (1, 1A) entworfen ist, 100 oder mehr zu betragen.

2. Empfangsspule (1, 1A) nach Anspruch 3, wobei der Kern (2) H-förmig ist.

3. Empfangsvorrichtung (41), die Folgendes umfasst:

die Empfangsspule (1, 1A) nach Anspruch 1 oder 2; und
eine Empfangseinheit (47), die konfiguriert ist, über den Spulenabschnitt ein Wechselspannungssignal zu empfangen.

4. Kontaktfreies Leistungsübertragungssystem (31; 41), das Folgendes umfasst:

eine Übertragungsvorrichtung (31), die konfiguriert ist, ein Wechselspannungssignal zu erzeugen; und
eine Empfangsvorrichtung (41) nach Anspruch 3, die konfiguriert ist, das von der Übertragungsvorrichtung (31) erzeugte Wechselspannungssignal zu empfangen,
wobei die Übertragungsvorrichtung (31) Folgendes umfasst:

einen Übertragungsspulenabschnitt (11), in dem ein Draht flach gewickelt ist; und
eine Übertragungseinheit (37), die konfiguriert ist, den Übertragungsspulenabschnitt (11) mit dem Wechselspannungssignal zu versorgen, und
wobei die Empfangsvorrichtung und die Übertragungsvorrichtung derart konfiguriert sind, das beide einen Q-Wert von 100 und mehr und einen Kopplungskoeffizienten von k = 0,2 aufweisen.

5. Kontaktfreies Leistungsübertragungssystem (31; 41) nach Anspruch 4, wobei der Übertragungsspulenabschnitt (11) dem Empfangsspulenabschnitt gegenüberliegt und auf der Oberfläche des Übertragungsspulenabschnitt (11) eine magnetische Folie (12) umfasst.

**Revendications**

1. Bobine de réception (1, 1A) comprenant :

- un noyau (2) comprenant un corps magnétique ;
- une partie bobine dans laquelle un fil (5) est enroulé autour du noyau (2) et qui est couplée électromagnétiquement à une bobine externe pour transmettre de l'énergie ; et
**caractérisée en ce que** :

- un corps métallique non magnétique (6) est disposé au niveau d'une face latérale de la partie bobine ;
dans laquelle

- le corps métallique non magnétique (6) possède une épaisseur de 0,3 mm ou plus ;
- une partie résine (3, 3A) est fournie et contient le noyau (2) comprenant le corps magnétique et la partie bobine ;
- le corps métallique non magnétique (6) est disposé sur une face latérale (3a) de la partie -résine- (3, 3A) ;
- le corps métallique non magnétique (6) est disposé à environ 5 mm de la face latérale de la partie bobine ; et
- la valeur Q de la bobine de réception (1, 1A) est conçue pour être de 100 ou plus.

2. Bobine de réception (1, 1A) selon la revendication 3, dans laquelle le noyau (2) a une forme de type H.

3. Appareil de réception (41) comprenant :

- la bobine de réception (1, 1A) selon les revendications 1 ou 2 ; et
- une unité de réception (47) conçue pour recevoir un signal CA via la partie bobine.

4. Système de transmission d'énergie sans contact (31 ; 41) comprenant :

- un appareil de transmission (31) qui est conçu pour générer un signal CA ; et
- un appareil de réception (41) selon la revendication 3, conçu pour recevoir le signal CA généré par l'appareil de transmission (31) ;
- dans lequel l'appareil de transmission (31) comprend :

∘ une partie bobine de transmission (11) dans laquelle un fil est enroulé à plat ; et
∘ une unité de transmission (37) conçue pour envoyer le signal CA à la partie bobine de transmission (11) ; et

- dans lequel l'appareil de transmission et l'appareil de réception sont conçus de manière à avoir tous les deux une valeur Q de 100 et plus et un coefficient de couplage k = 0,2.

5. Système de transmission d'énergie sans contact (31, 41) selon la revendication 4, dans lequel la partie bobine de transmission (11) est opposée à la partie bobine de réception et comprend une feuille magnétique (12) sur la surface de la partie bobine de transmission (11).

# FIG. 1

# FIG. 2

# FIG. 3

(a)

(b)

(c)

(d)

# FIG. 4

15 RECEIVING COIL

16

12

11
TRANSMITTING COIL

# FIG. 5

Y DIRECTION
0mm

(100mm,75mm)

X
DIRECTION
0mm

X
DIRECTION
200mm

21

Y DIRECTION
150mm

## FIG. 6

## FIG. 7

## FIG. 8

$\eta_{rf}$
INTER-COIL
EFFICIENCY

Q1＝58
Q2＝180
k＝0.066
S＝6.5

S=kQ

## FIG. 9

INTER-COIL EFFICIENCY
POSITION OF MEASUREMENT (2) [%]

INTER-COIL EFFICIENCY
POSITION OF MEASUREMENT (1) [%]

INTER-COIL
EFFICIENCY

DISTANCE TO PRIMARY COIL [mm]

# FIG. 10

# FIG. 11

DISTANCE BETWEEN METAL AND COIL SIDE FACE [mm]

FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4413236 B
- JP 2008206231 A
- JP 2011050127 A
- JP 2001258182 A